# EUROPEAN PATENT APPLICATION

(11) **EP 1 306 270 A2**
(43) Date of publication of application: **02.05.2003**
(21) Application number: 02023533.9
(22) Date of filing: 22.10.2002
(51) Int. Cl.: B60R 21/01

(54) **Airbag initiator safety mechanism**

(30) Priority: 23.10.2001 US 38624
(71) Applicant: AM-Safe, Inc., Phoenix, AZ 85043 (US)
(72) Inventor: Shields, Ronald Allen, c/o Am-Safe Incorporated, Phoenix, Arizona 85043 (US)
(74) Representative: Leson, Thomas Johannes Alois, Dipl.-Ing.

(57) **Abstract**

An automated airbag deployment system employs an additional switch that is utilized to prevent inadvertent triggering of the gas discharge initiator mechanism. The additional switch member is placed in parallel with the airbag initiator triggering device. This is a normally closed switch which effectively short-circuits the two electrical contacts of the airbag initiator triggering member. This short-circuit effectively prevents inadvertent triggering of this mechanism of the device through static electricity or some other undesired electrical event. The short-circuit mechanism may be utilized to provide improved safety throughout the manufacturing process as well as after the product has been incorporated into a passenger compartment. The resultant product that incorporates this device is much more stable and provides an additional margin of safety.

## Description

### Background of the Invention

### Field of the Invention

The present invention is generally directed to the field of systems and methods for automatically controlling the deployment of airbag personal safety systems. More specifically, the present invention is directed to an automated system for preventing undesired deployment of an airbag or inadvertent triggering of an airbag initiator mechanism.

### Description of the Related Art

Conventional airbag initiator mechanisms or triggering systems typically employ an electronically activated squib or initiator that triggers an explosive gas generating device. The required electrical triggering signal is fundamentally provided by a discharge cell or other source of supply voltage. In the typical conventional airbag design when a sensor senses a rapid acceleration event a normally open switch is closed thereby supplying the required triggering signal to the initiator mechanism. The initiator mechanism triggers the gas generating device that rapidly fills the air bag with gas to cushion a passenger during a crash.

In more advanced systems, especially those systems where the airbag is mounted on a personal restraint or seatbelt, one or more buckle switches may be used to ensure that the airbag is only deployed when the restraint system is actually being utilized by a passenger. These buckle switches prevent the triggering signal from reaching the initiator even during the occurrence of a rapid acceleration event.

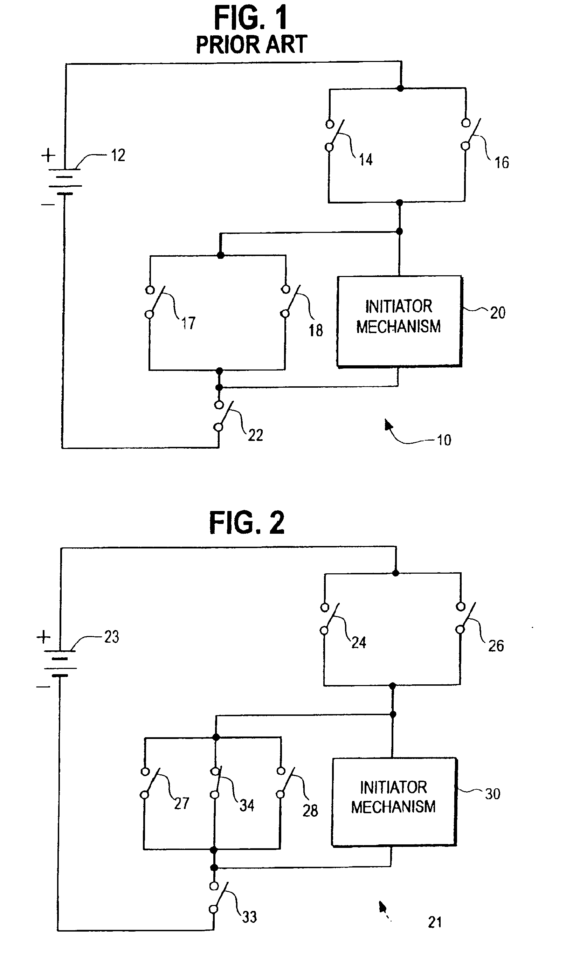

In a typical conventional design, an initiator or triggering mechanism is connected in series with the airbag deployment triggering switch and the buckle safety switches to the voltage supply cell or other voltage source. Figure 1 illustrates one such conventional device of the prior art which is shown generally at 10. A discharge cell or voltage supply source 12 supplies the required voltage and current for system operation. One or more buckle switches 14, 16 may be utilized to prevent undesired deployment of the airbag when the system is not being utilized by a passenger as noted above.

Additionally, one or more excessive magnetic field sensor switches 17, 18 are preferably connected in parallel across the squib or airbag initiator mechanism 20. The excessive magnetic field sensor switches 17, 18 are employed in order to prevent undesired triggering of the airbag if the system experiences an excessive external magnetic field. These switches are utilized because the acceleration event detection mechanism that closes the normally open switch 22 when such a rapid acceleration event is detected is sensitive to external magnetic fields which, if present, could result in undesired deployment of the airbag.

In the conventional device shown in Figure 1, once a crash event is detected the acceleration event triggering mechanism triggers the switch 22 that closes and connects the airbag initiator to the voltage supply. This results in triggering of the gas discharge mechanism of the airbag, thereby deploying the airbag. Triggering of the airbag will only occur when the buckle switch or switches remain closed while the excessive magnetic field switches remain open. Therefore deployment of the airbag only occurs when an acceleration event is detected in the absence of an excessive external magnetic field while the restraint system is actually being utilized by a passenger.

One shortcoming of these existing conventional systems is that the automated triggering mechanism or initiator device currently does not have any safety mechanism to prevent inadvertent triggering of this mechanism through static electricity or some other undesired electrical event. The device is thus susceptible to static electricity or some other inadvertent electrical signal resulting in undesired deployment of the bag or triggering of this mechanism during manufacturing process.

Accordingly, there remains a need in the field of airbag deployment system designs for improved airbag triggering mechanisms that will not be susceptible to inadvertent deployment of the airbag or triggering of airbag initiator mechanism. One object and advantage of the present invention is to provide systems and methods for overcoming the deficiencies of the prior art triggering mechanisms by providing an initiator device that is not susceptible to inadvertent triggering through static electricity or some other inadvertent electrical signal. Another object and advantage of the present invention is to provide a mechanism for ensuring that the initiator or triggering mechanism is not inadvertently triggered during the manufacturing process.

Other objects and advantages of the present invention will be apparent in light of the following Summary and Detailed Description of Presently Preferred Embodiments.

### Summary of the Invention

The present invention is generally directed to systems and methods for preventing the inadvertent triggering of an airbag initiator mechanism. The novel systems and methods of the present invention provide a safety mechanism that is comprised of at one additional switch connected in series with the deployment switch or triggering mechanism. The additional switch member is placed in parallel with the airbag initiator triggering device. This is a normally closed switch which effectively short-circuits the two electrical contacts of the airbag initiator triggering member. This short-circuit effectively prevents inadvertent triggering of this mechanism of the device through static electricity or some other undesired electrical event. This short-circuit mechanism may be utilized to provide improved safety throughout the manufacturing process as well as after the product has been incorporated into a passenger compartment. The resultant product that incorporates this device is much more stable and provides an additional margin of safety.

During a crash event, the airbag triggering system of the present invention works very similarly to the prior art triggering mechanisms. The primary triggering switch that is in a normally open configuration closes when an acceleration event detection mechanism sends an acceleration event detection signal. This signal may be utilized in controlling both the normally open deployment triggering switch as well as the normally closed safety switch. One switch opens while the other switch closes thereby allowing the required electrical triggering signal to be transmitted to the initiator mechanism. All of the remaining switches and control devices operate in similar fashion to the airbag deployment control systems of the prior art. The presence of this additional switch provides yet additional margin of safety over the prior art airbag deployment control systems. A detailed description of an exemplary embodiment of the present invention is set forth below.

### Brief Description of the Drawings

Figure 1 illustrates a conventional airbag deployment triggering system;
Figure 2 illustrates an exemplary embodiment of an airbag deployment system in accordance with the present invention.

### Detailed Description of the Presently Preferred Embodiments

Figure 2 illustrates an exemplary embodiment of the present invention which is shown generally at 21. In accordance with the preferred exemplary embodiment of the present invention, an airbag initiator mechanism or triggering systems employs an electronically activated squib or initiator member 30 that triggers an explosive gas generating device that has not been shown for the sake of convenience. Once triggered, the explosive gas generating device rapidly fills the airbag. The required electrical signal is fundamentally provided by a discharge cell or other source of supply voltage 23.

As in the typical conventional airbag design described above, a normally open switch 33 is closed during a rapid acceleration event thereby supplying the required triggering signal to the initiator mechanism. In the exemplary embodiment of the present invention, a further normally closed safety switch 34 is placed in parallel across the two contacts of the initiator mechanism 30. The normally closed the safety switch 34 ensures that the initiator mechanism 30 does not inadvertently trigger due to the presence of static electricity or some other inadvertent electrical signal or source.

During an impact event, after the acceleration event detection mechanism has generated a trigger signal, the normally closed switch 34 opens and the normally open switch 33 closes thereby providing the appropriate triggering signal to the initiator member 30 The initiator mechanism thus triggers the gas generating device as known in the art.

Additionally, as noted above, one or more buckle switches 24, 26 may be used to ensure that the airbag is only deployed when the restraint system is actually being utilized by a passenger. These buckle switches prevent the triggering signal from reaching the initiator even during the occurrence of a rapid acceleration event.

The initiator or triggering mechanism 30 is connected in series with the airbag deployment triggering switch 33 and the buckle safety switches 24, 26 to the voltage supply cell or other voltage source 23. Additionally, one or more excessive magnetic field sensor switches 27, 28 are preferably connected in parallel across the squib or airbag initiator mechanism 30. The excessive magnetic field sensor switches 27, 28 are employed as in the devices of the prior art in order to prevent undesired triggering of the airbag if the system experiences an excessive external magnetic field. These switches are utilized because the acceleration event detection mechanism is sensitive to external magnetic fields which, if present, could result in undesired deployment of the airbag.

In the device disclosed in the preferred exemplary embodiment, when a crash event is detected the acceleration event triggering mechanism triggers the switch 33 that connects the airbag initiator 30 to the voltage supply 23. The same signal may be utilized to open the normally closed safety switch 34. This results in triggering of the gas discharge mechanism of the airbag, thereby deploying the airbag. Triggering of the airbag will only occur when the buckle switch or switches 24, 26 remain closed while the excessive magnetic field switches 27, 28 remain open.

Those skilled in the art will appreciate that the systems and methods of the present invention may be utilized without the use of excessive magnetic field detection switches 27, 28 and buckle switches 24, 26. Specifically, the systems and methods of the present invention may be utilized with any airbag design. It should be recognized that the preferred exemplary embodiment described herein provides an example of a specific implementation of the invention and that other alternate designs and or substitutions of elements are possible. Accordingly, it should be recognized that other embodiments of the invention will also fall within the spirit and scope of the appended claims.

An automated airbag deployment system employs an additional switch that is utilized to prevent inadvertent triggering of the gas discharge initiator mechanism. The additional switch member is placed in parallel with the airbag initiator triggering device. This is a normally closed switch which effectively short-circuits the two electrical contacts of the airbag initiator triggering member. This short-circuit effectively prevents inadvertent triggering of this mechanism of the device through static electricity or some other undesired electrical event. The short-circuit mechanism may be utilized to provide improved safety throughout the manufacturing process as well as after the product has been incorporated into a passenger compartment. The resultant product that incorporates this device is much more stable and provides an additional margin of safety.

## Claims

1. An airbag deployment triggering system comprising:
an initiator mechanism;
at least one normally open switch connected in parallel across the initiator mechanism; and
at least one further normally open triggering switch connected in series with the initiator mechanism.

2. The airbag deployment triggering system of claim 1, further comprising at least one buckle switch connected in series with the initiator mechanism.

3. The airbag deployment triggering system of claim 1, further comprising at least one normally open magnetic field sensor switch connected in parallel with the initiator mechanism.

4. The airbag deployment triggering system of claim 2, further comprising at least one normally open magnetic field sensor switch connected in parallel with the initiator mechanism.

5. A method of triggering deployment of an airbag safety system comprising the steps of:
opening a normally closed switch connected in parallel across an initiator mechanism; and
closing a normally open switch connected in series with the initiator mechanism.

6. The method of triggering deployment of an airbag according to claim 5, further comprising at least one buckle switch connected in series with the initiator mechanism.

7. The method of triggering deployment of an airbag according to claim 5, further comprising at least one normally open magnetic field sensor switch connected in parallel with the initiator mechanism.

8. The method of triggering deployment of an airbag according to claim 6, further comprising at least one normally open magnetic field sensor switch connected in parallel with the initiator mechanism.
